# EUROPEAN PATENT APPLICATION

(11) **EP 4 579 876 A1**
(43) Date of publication of application: **02.07.2025**
(21) Application number: 23307391.5
(22) Date of filing: 26.12.2023
(51) Int. Cl.: H01M 10/613, H01M 10/625, H01M 10/6555, H01M 50/209, H01M 50/289, H01M 50/509

(54) **BATTERY MODULE WITH REDUCED RISK OF THERMAL RUNAWAY**

(71) Applicant: Automotive Cells Company SE, 33520 Bruges (FR)
(72) Inventor: ALI, Sikandar, 33320 EYSINES (FR); BANDLA, Venkat Nehru, 33520 BRUGES (FR); CHEGDANI, Salwa, 33520 BRUGES (FR)
(74) Representative: Lavoix

(57) **Abstract**

The battery module (10) comprises a plurality of units (U1, U2) aligned in an alignment direction (X). Each unit (U1, U2) is separated of adjacent units by respective thermal walls (11). The plurality of units (U1, U2) comprises two end units (U1), each arranged at a respective end of the battery module (10) in the alignment direction (X), and intermediate units (U2) aligned between the end units (U1). Each end unit (U1) comprises only one first cell (12), and each intermediate unit comprises at least one cell (12, 14), the capacity of the first cell (12) of each end unit (U1) being smaller than the total capacity of the at least one cell of at least one of the intermediate units (U2).

## Description

The present invention relates to a battery module
A battery module is already known from prior art, comprising a plurality of cells connected in series.

The battery's safety and stability depend on maintaining internal temperatures within specific limits. If the temperature exceeds the critical level on either end, thermal runaway can occur, destroying the battery or, even worse, starting a fire.

Thermal runaway is a chain reaction within a battery that can be very difficult to stop once it has started. It occurs when the temperature inside a battery reaches the point that causes a chemical reaction to occur inside the battery. This chemical reaction produces even more heat, which drives the temperature higher, causing further chemical reactions that create more heat.

In thermal runaway, the battery cell temperature rises incredibly fast (milliseconds). The energy stored in that battery is released very suddenly. This chain reaction creates extremely high temperatures (around 752 degrees Fahrenheit / 400 degrees Celsius). These temperatures can cause gassing of the battery and a fire that is so hot it can be nearly impossible to extinguish.

Thus, protecting the battery against thermal runaway is an essential safety feature.

The invention is intended to reduce the risks of a thermal runaway.

To this end, the invention relates to a battery module, comprising a plurality of units aligned in an alignment direction, each unit being separated of adjacent units by respective thermal walls, the plurality of units comprising two end units, each arranged at a respective end of the battery module in the alignment direction, and intermediate units aligned between the end units, characterized in that each end unit comprises only one first cell, and each intermediate unit comprises at least one cell, the capacity of the first cell of each end unit being smaller than the total capacity of the at least one cell of at least one of the intermediate units.

The idea of invention is to add smaller cells at the extremities of a battery module, adjacent to the end plates. These smaller cells are then connected in parallel such that the cumulative capacity equals those of the other center cells. These parallelly connected cells are then connected in series with rest the remaining cells of the battery module. The primary objective behind using small cells at the extremities is to have less energy, in case of the occurrence of a Thermal Runaway. Indeed, corner cells are considered the worst cases during a thermal runaway, so the invention is intended to mitigate the effect. Placing smaller capacity cells at the extremities of a battery module enables reduction in thermal barrier thickness, which can be sufficient to avoid or to delay thermal runaway. This provides additional space in the module to increase energy density.

A battery module according to the invention may comprise one or several of the following features, taken in any possible combination.
- The first cell of each end unit has a first capacity, and each intermediate unit comprises only one second cell having a second capacity different from the first capacity, the first capacity preferentially being half of the second capacity.
- The first cells are connected in parallel together, then are connected in series with the second cells, which are connected in series together.
- The battery module comprises four first cells each having a first capacity, the other cells being second cells having a second capacity different from the first capacity, the first capacity preferentially being half of the second capacity.
- Two of the first cells form a first pair arranged at a first end of the battery module in the alignment direction, and the two others of them form a second pair arranged at a second end of the battery module, the first cells of each pair being connected in parallel together, and connected in series to an adjacent second cell, and all the second terminals being connected in series.
- Each intermediate unit adjacent with one respective of the end units comprises only the first cell of the same pair as the first cell of the corresponding end unit, and all the other intermediate units comprise only a second cell.
- Each intermediate unit adjacent with one respective of the end units comprises only a second cell, the first cell of the same pair as the first cell of the corresponding end unit being the sole cell of another intermediate unit adjacent to said intermediate unit adjacent with one respective of the end units, so that a second cell is between the two first cells of each pair.
- The battery module comprises only identical first cells aligned in the alignment direction, each end unit comprising only one first cell, and each intermediate unite comprising two first cells.
- All the first cells are connected by pair of first cells connected in parallel, and all the pairs are connected in series.

Different aspects and advantages of the invention will be shown in the following disclosure, given as a non limitative example and made in reference to annexed drawings, in which:
- Figure 1 is a schematic view of a battery module according to a first example of embodiment;
- Figure 2 is a schematic view of a battery module according to a second example of embodiment;

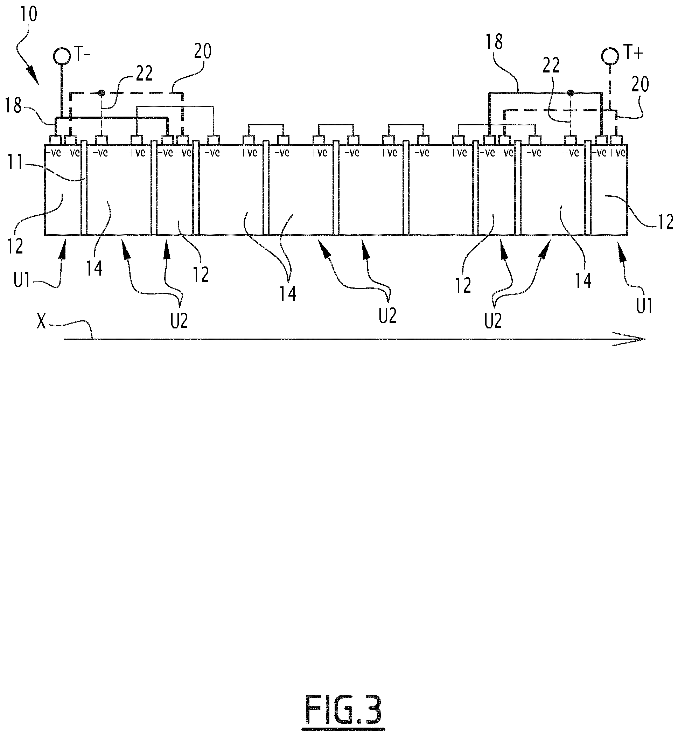

- Figure 3 is a schematic view of a battery module according to a third example of embodiment;
- Figure 4 is a schematic view of a battery module according to a forth example of embodiment.

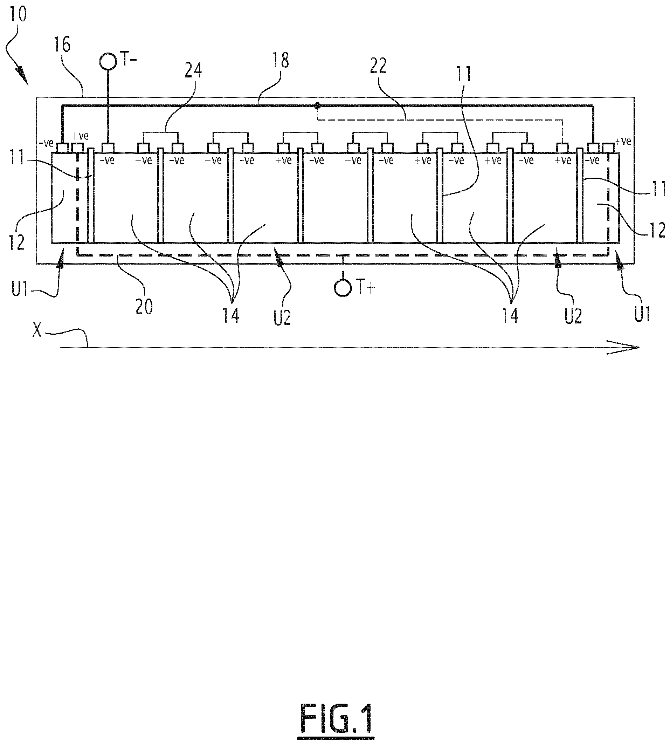

Figure 1 shows a battery module 10 according to a first embodiment of the invention.

The battery module 10 comprises a plurality of units U1, U2 aligned in an alignment direction X, each unit being separated of adjacent units by respective thermal walls 11.

The thermal walls 11 are intended to thermally isolate the units from one another, in order to limit heat transfer from on unit to another.

The plurality of units comprises two end units U1, each arranged at a respective end of the battery module 10 in the alignment direction X, and intermediate units U2 aligned between the end units U1.

Each end unit U1 comprises a first cell 12 having a first capacity, and each intermediate unit U2 comprises at least one second cell 14 having a second capacity.

The capacity of each first cell 12 is smaller than the total capacity of the at least one second cell 14 of at least one of the intermediate unit U2.

In the first embodiment, each intermediate unit U2 comprises only one second cell 14. Thus, the capacity of each first cell 12 is smaller than the capacity of each second cell 14.

For example, the capacity of each first cell 12 is half of the capacity of each second cell 14.

The first cells 12 and second cells 14 are aligned in a battery casing 16, in the alignment direction X.

In this first embodiment, the battery module 10 comprises two first cells 12, each arranged at a respective end of the battery module 10 in the alignment direction X. All the second cells 14 are aligned between the two first cells 12.

Each first cell 12 and each second cell 14 comprises two terminals, i.e. a positive terminal +ve and a negative terminal -ve.

The two first cells 12 are arranged in parallel. It means that the negative terminals - ve of the first cells 12 are electrically connected together, via a first connection 18, and that the positive terminals +ve of the first cells 12 are electrically connected together, via a second connection 20.

The second cells 14 are arranged in series. One of the second cells 14 has its negative terminal -ve connected to a general negative Terminal T- of the battery module 10, and its positive terminal +ve is connected to the negative terminal of an adjacent second cell 14. Another of the second cells 14 has its positive terminal +ve connected to the negative terminals of the first cells 12, via a third connection 22, and its negative terminal -ve is connected to the positive terminal of an adjacent second cell 14. The other second cells 14 all have their negative terminal connected to the positive terminal of an adjacent second cell 14 and their positive terminal connected to the negative terminal of another adjacent second cell, via fourth connections 24.

The positive terminals +ve of the first cells 12 are connected to a general positive terminal T+ of the battery module 10.

In other words, the first cells 12 are connected in parallel together, then are connected in series with the second cells 14, which are connected in series together.

As indicated above, the first cells 12 have a capacity inferior than the capacity of the second cells 14. For example, the first cells 12 each have half capacity of each second cell 14.

Thus, in case of thermal runaway starting by the ends of the battery module 10, the involved cells are the first cells 12, which have a smaller capacity than the second cells 14. So, less energy is produced if the thermal runaway starts in the extremity cells.

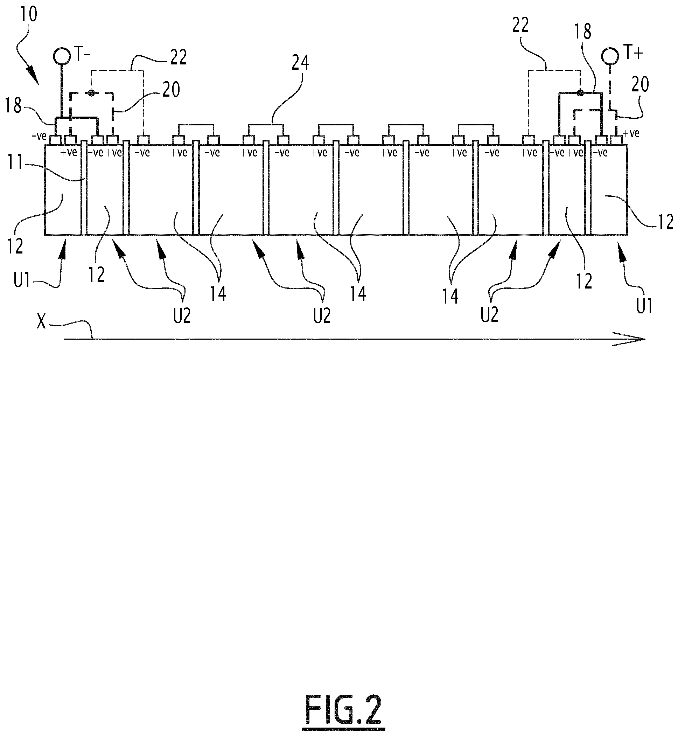

A second embodiment is shown on Figure 2. On this figure 2, the same references as Figure 1 are used to refer to similar members.

The battery module 10 according to the second embodiment comprises four first cells 12. Two of them form a first pair arranged at a first end of the battery module 10 in the alignment direction X, and the two others of them form a second pair arranged at a second end of the battery module 10.

The first cells 12 of each pair are connected in parallel together, and connected in series to an adjacent second cell 14. It means that the negative terminals -ve of the first cells 12 of each pair are electrically connected together, via a first connection 18, and that the positive terminals +ve of the first cells 12 of each pair are electrically connected together, via a second connection 20.

The negative terminals -ve of the first pair are connected to the general negative terminal T- of the battery module 10, and the positive terminals +ve of the first pair are connected to the negative terminal of an adjacent second terminal 14 via a third connection 22.

The positive terminals +ve of the second pair are connected to the general positive terminal T+ of the battery module 10, and the negative terminals -ve of the second pair are connected to the positive terminal of an adjacent second terminal 14.

All the second terminals 14 are connected in series, in the same manner as in the first embodiment.

In this second embodiment, each end unit U1 comprises only one first cell 12, and the intermediate units U2 each comprises only one cell, some of them comprises a first cell 12 and some of them comprises a second cell 14.

More particularly, each intermediate units U2 adjacent to one of the end units U1 comprises a first cell 12, and the other intermediate units U2 comprises a second cell 14.

Thus, in conformity with the invention, the capacity of each first cell 12 is smaller than the total capacity of the at least one second cell 14 of at least one of the intermediate units U2, i.e. the intermediate units comprising a second cell 14.

The third embodiment is similar to the second embodiment, except that there is a second cell 14 between the two first cells 12 of each pair.

The connections are similar as in the second embodiment.

The first cells 12 of each pair are connected in parallel together, and connected in series to the second cell 14 arranged between them. It means that the negative terminals - ve of the first cells 12 of each pair are electrically connected together, via a first connection 18, and that the positive terminals +ve of the first cells 12 of each pair are electrically connected together, via a second connection 20.

The negative terminals -ve of the first pair are connected to the general negative terminal T- of the battery module 10, and the positive terminals +ve of the first pair are connected to the negative terminal of the second terminal 14 between them via a third connection 22.

The positive terminals +ve of the second pair are connected to the general positive terminal T+ of the battery module 10, and the negative terminals -ve of the second pair are connected to the positive terminal of the second terminal 14 between them.

All the second terminals 14 are connected in series, in the same manner as in the second embodiment.

In this third embodiment, each end unit U1 comprises only one first cell 12, and the intermediate units U2 each comprises only one cell, some of them comprises a first cell 12 and some of them comprises a second cell 14.

More particularly, each intermediate unit U2 adjacent to one of the end unit U1 comprises a second cell 14, and each intermediate unit U2 adjacent to this one comprises a first cell 12 to form a pair with the first cell of the corresponding end unit U1.

The other intermediate units U2 comprises a second cell 14.

Thus, in conformity with the invention, the capacity of each first cell 12 is smaller than the total capacity of the at least one second cell 14 of at least one of the intermediate units U2, i.e. the intermediate units comprising a second cell 14.

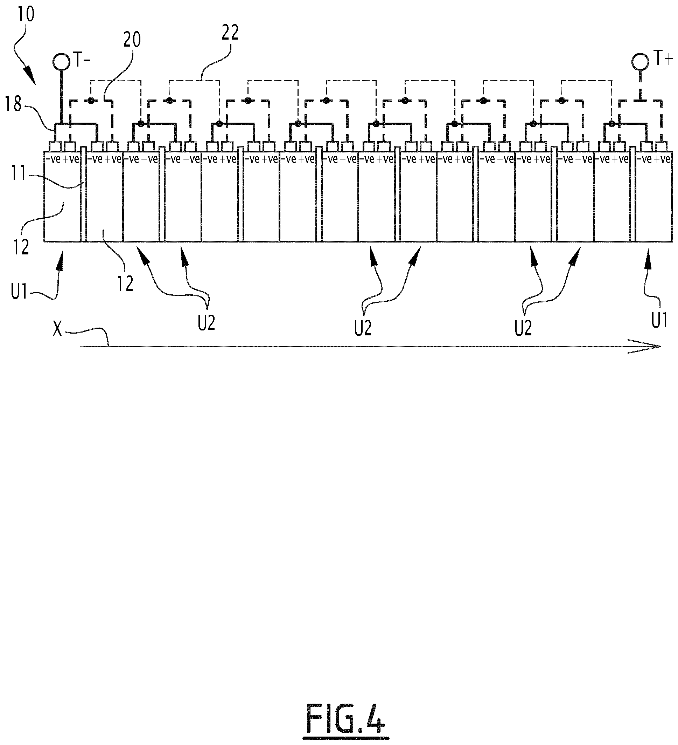

A fourth embodiment is shown on figure 4.

In this fourth embodiment, the battery module 10 only comprises first cells 12.

However, each end unit U1 comprises only one first cell 12, and each intermediate unite U2 comprises two first cells 12.

Thus, the capacity of each first cell 12 is smaller than the total capacity of the cells of at least one of the intermediate units U2.

All the first cells 12 are connected by pair of first cells connected in parallel, via connections 18, 20. It means that the negative terminals -ve of the first cells 12 of each pair are electrically connected together, via a first connection 18, and that the positive terminals +ve of the first cells 12 of each pair are electrically connected together, via a second connection 20.

Then, all the pairs are connected in series via connections 22.

The negative terminals -ve of the first pair are connected to the general negative terminal T- of the battery module 10, and the positive terminals +ve of the first pair are connected to the negative terminal of the adjacent pair via a third connection 22.

The positive terminals +ve of the last pair are connected to the general positive terminal T+ of the battery module 10, and the negative terminals -ve of this last pair are connected to the positive terminals of the adjacent pair.

In this fourth embodiment, each end unit U1 comprises only one first cell 12, and the intermediate units U2 each comprises two first cells 12.

Thus, in conformity with the invention, the capacity of each first cell 12 is smaller than the total capacity of the cells of at least one of the intermediate units U2.

It should be noticed that the invention is not limited to previous embodiments, but it could encompass other variant in the scope of claims.

## Claims

1. Battery module (10), comprising a plurality of units (U1, U2) aligned in an alignment direction (X), each unit (U1, U2) being separated of adjacent units by respective thermal walls (11), the plurality of units (U1, U2) comprising two end units (U1), each arranged at a respective end of the battery module (10) in the alignment direction (X), and intermediate units (U2) aligned between the end units (U1), **characterized in that** each end unit (U1) comprises only one first cell (12), and each intermediate unit comprises at least one cell (12, 14), the capacity of the first cell (12) of each end unit (U1) being smaller than the total capacity of the at least one cell of at least one of the intermediate units (U2).

2. Battery module (10) according to claim 1, wherein the first cell (12) of each end unit (U1) has a first capacity, and each intermediate unit (U2) comprises only one second cell (14) having a second capacity different from the first capacity, the first capacity preferentially being half of the second capacity.

3. Battery module (10) according to claim 2, wherein the first cells (12) are connected in parallel together, then are connected in series with the second cells (14), which are connected in series together.

4. Battery module (10) according to claim 1, comprising four first cells (12) each having a first capacity, the other cells being second cells (14) having a second capacity different from the first capacity, the first capacity preferentially being half of the second capacity.

5. Battery module (10) according to claim 4, wherein two of the first cells (12) form a first pair arranged at a first end of the battery module (10) in the alignment direction (X), and the two others of them form a second pair arranged at a second end of the battery module (10), the first cells (12) of each pair being connected in parallel together, and connected in series to an adjacent second cell (14), and all the second terminals (14) being connected in series.

6. Battery module (10) according to claim 5, wherein each intermediate unit (U2) adjacent with one respective of the end units (U1) comprises only the first cell (12) of the same pair as the first cell (12) of the corresponding end unit (U1), and all the other intermediate units (U2) comprise only a second cell (14).

7. Battery module (10) according to claim 5, wherein each intermediate unit (U2) adjacent with one respective of the end units (U1) comprises only a second cell (14), the first cell (12) of the same pair as the first cell (12) of the corresponding end unit (U1) being the sole cell of another intermediate unit (U2) adjacent to said intermediate unit (U2) adjacent with one respective of the end units (U1), so that a second cell (14) is between the two first cells (12) of each pair.

8. Battery module (10) according to claim 1, comprising only identical first cells (12) aligned in the alignment direction (X), each end unit (U1) comprising only one first cell (12), and each intermediate unite (U2) comprising two first cells (12).

9. Battery module (10) according to claim 8, wherein all the first cells (12) are connected by pair of first cells connected in parallel, and all the pairs are connected in series.
